# EUROPEAN PATENT SPECIFICATION

(11) **EP 1 358 620 B1**
(45) Date of publication and mention of the grant of the patent: **03.05.2006**
(21) Application number: 02722063.1
(22) Date of filing: 11.02.2002
(51) Int. Cl.: G06K 7/00

(54) **CONTACTING APPARATUS FOR A SIM-CARD**
KONTAKTIEREINRICHTUNG FÜR EINE SIM-KARTE
APPAREIL DE CONTACT POUR CARTE SIM

(30) Priority: 09.02.2001 DE 10105869; 18.04.2001 DE 10118972
(43) Date of publication of application: 05.11.2003
(73) Proprietor: AMPHENOL-TUCHEL ELECTRONICS GmbH, D-74080 Heilbronn (DE)
(72) Inventor: KAISER, Olga, 74080 Heilbronn (DE); BRAUN, Gerhard, 74626 Bretzfeld-Bitzfeld (DE)
(74) Representative: Wagner, Karl H.
(86) International application number: PCT/EP2002/001412
(87) International publication number: WO 2002/069241

(56) References cited:
- EP-A- 0 947 944
- EP-A- 1 030 260
- WO-A-91/15101

## Description

The invention relates to a contacting apparatus for a smart card, in particular a contacting apparatus for a SIM-card. Smart cards are also called sometimes chip cards. Smart cards used in mobile telephones are frequently SIM-cards, with "SIM" standing for "subscriber identifying module". Thus a SIM is a module which identifies the identity of a subscriber, for instance a telephone subscriber. The card contacts of such a module correspond to an IC-card according to ISO 7816 with the outer dimensions of the SIM card being substantially smaller with 25 x 15 mm compared to 85,5 x 54 mm for an IC or smart card.

The present invention intends to provide a contacting apparatus particularly for a SIM-card where the outer dimensions of the contacting apparatus are not substantially larger than the outer dimensions of the SIM-card itself. Moreover, the use of the SIM-card - in particular the insertion and the removal of the SIM-card - should be simplified and possible without a tool.

For instance EP 0 472 692 B2 discloses a contacting apparatus for a SIM-card. This contacting apparatus comprises a cover which is pivotally mounted at a housing and is adapted to receive a SIM-card.

Further attention is drawn to WO 91 15101 which discloses a contactor device, especially for an SIM which has a contact holder having a pull-out stop or a cover to hold the SIM in its reading position in order to hold the SIM in the contact holder and especially in a recess therein.

EP-A-0 947 944 discloses a card reader connector for a SIM card comprising an insulative body and a cover pivotably mounted on pivot pins of the insulative body for movement between an open and closed position wherein contact portions of terminals mounted in the insulative body electrically connect with contacts of the card when the cover is in the closed position. The cover is slidably movable in a direction perpendicular to an axis of the pivot pins. A locking means is provided between the cover and the insulative body comprising an L-shaped engaging piece on the insulative body and a corresponding actuating piece on the cover which interengage when the cover is in its closed position to lock the cover to the insulative body. A leaf spring biases the cover in a direction away from the insulative body. The connector is characterized in that when the cover is moved to its closed position, it is slidably moved rearwardly, toward the axis of the pivot pins, to produce a spring force. Therefore, when the cover is in its closed position, it is in a fully locked position by the resilient spring force imparted by the leaf spring. The card reader connector therefore facilitates insertion and removal of the card and maintains its integrity and robustness irrespective of its small size.

EP-A-1 030 260 discloses a SIM-card connector having a cover disposed on a contact support for pivotal movement about a pivoting axis, wherein said pivoting axis is displaced towards the front to reduce the longitudinal dimension, and an optimized roll off geometry recessed in the contact support is provided.

Inasmuch as contacting apparatus for a SIM-card are frequently used in mobile telephones, i.e. in an area where the customer is interested in smaller and smaller apparatus, the desire exists to reduce the dimensions of the contacting apparatus. The present invention intends to reduce the entire size, in particular the height of a contacting apparatus for a SIM-card without endangering the stability and the functions of the contacting apparatus.

The present invention provides for a contacting apparatus for a SIM-card. The contacting apparatus comprises a housing which serves as a contact support. A cover is pivotally mounted at the housing and is adapted to receive a SIM-card, i.e. a SIM-card can be inserted into the cover. The cover can be pivoted towards the contact elements such, that card contacts provided on the SIM-card can be brought into contact with contact elements supported in that contact support.

Preferably, the cover is provided with guide projections projecting inwardly and adapted for guiding and receiving the SIM-card. The generally plate shaped housing provides for a support surface for a surface of the SIM-card which comprises the card contacts. The plate shaped housing or contact support further provides for abutment surfaces which come into engagement with the edges of the SIM-card and form a card receiving space.

The cover is, like the housing, preferably made as a single piece from plastic material by injection molding. The cover comprises a cover plate which extends, when the SIM-card is inserted, adjacent to the upper surface of the SIM-card which does not comprise the card contacts. The cover plate is limited at both its longitudinal sides by rails which form the above mentioned guide projections.

At the contact support or housing, more precisely at a bottom wall of the housing, support or abutment means are provided. Abutment means provided at the cover are adapted to abut at said support means, when the cover is placed in its closed position as well as in its locked position.

In accordance with the present invention, the support means of the housing as well as the abutment means of the cover a provided in the form of an inclined surface. Said inclined surfaces are matingly located on each other in the closing and locking position of the cover.

The inclined surfaces of the housing as well as the inclined surfaces of the cover preferably extend along the entire longitudinal sides of the housing and the cover, respectively. It is also possible to provide the respective inclined surfaces on both sides but only in the forward region of the contacting apparatus. It is also possible to provide the inclined surfaces only on one side of the contacting apparatus.

In case the inclined surfaces extend along almost the entire longitudinal sides of the housing and the cover, respectively, then utmost stability can be obtained. With the replacement of the "flat" or horizontal support for the cover by means of an inclined surface the support elements used so far (e.g. wings), a minimum height for the contacting apparatus is obtained.

For a contacting apparatus of the prior art the required minimum distance between the lower edge of the contact support and the lower edge of the cover support in the area of locking means is derived from the minimum height of the cover support (wings) and the minimum height of the cover support. In this manner the minimum height is limited below the card. In the area of the hinge means this limiting is provided by the pin guide, the pin diameter and the play as well as the upper pin guide. That support and the pin guide of the cover make sure that during the soldering operation the contact apparatus is placed on the soldering pads and not on the cover with the consequence, that the SMD-soldering operation can be carried out with no faults.

If one would reduce the entire heights of the individual support elements like for instance the wings and the lower guide for the pins, these elements could not be designed with a sufficient thickness such that the required stability and a safe feeling is no longer provided for. The "flat" support for the cover by means of an inclined surface causes that preferably also the lower pin guide is no longer necessary with the consequence, that the minimum distance between the contact support lower edge up to the card bottom edge can be reduced to the minimum height of the contact support. That cover support can be implemented for instance by a printed circuit board or by a cover support at the bottom side of the contact support.

According to a further embodiment of the invention it is provided that the cusp ends of the contact elements are extended such, that they are larger than check bores provided in the cover so that the contact elements cannot get trapped. In this manner the thickness of the contact support can be reduced independently of the cusp end.

Further preferred embodiments of the invention are referred to in the claims.

Further advantages, objects and details of the invention can be gathered from the following description of embodiments in connection with the drawing;
- Fig. 1: is a contacting apparatus for a SIM-card in the open position;
- Fig. 2: is a sectional view substantially along line 2-2 in Fig. 1 with the contacting apparatus being shown in its closed and locked position;
- Fig. 3: is a perspective view similar to Fig. 1 of a contacting apparatus in accordance with a preferred embodiment of the invention;
- Fig. 4: is a cross-section in substance along line 4-4 in Fig. 3 with the cover being shown in its closed and locked position;
- Fig. 5: is a detail of Fig. 2 for explaining the inventive features which are provided by the preferred embodiment of Figs. 3 and 4.

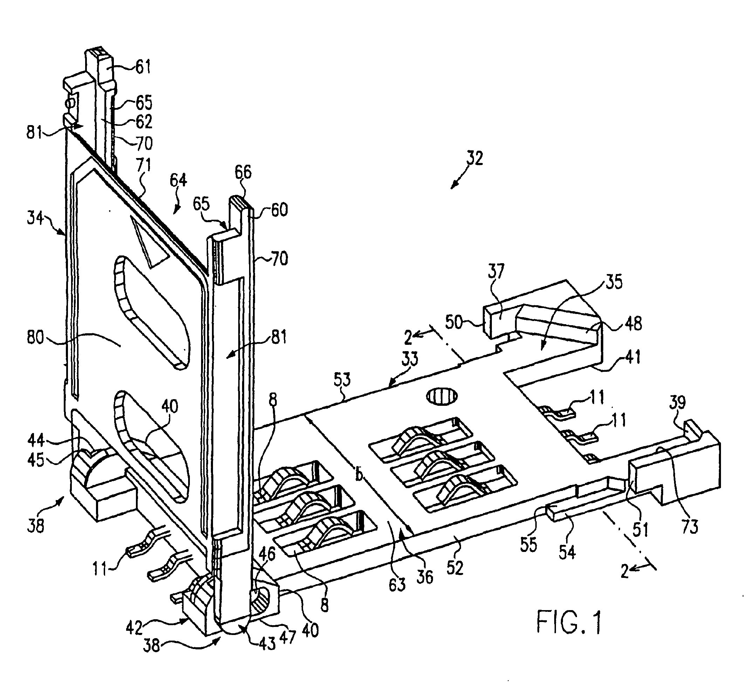

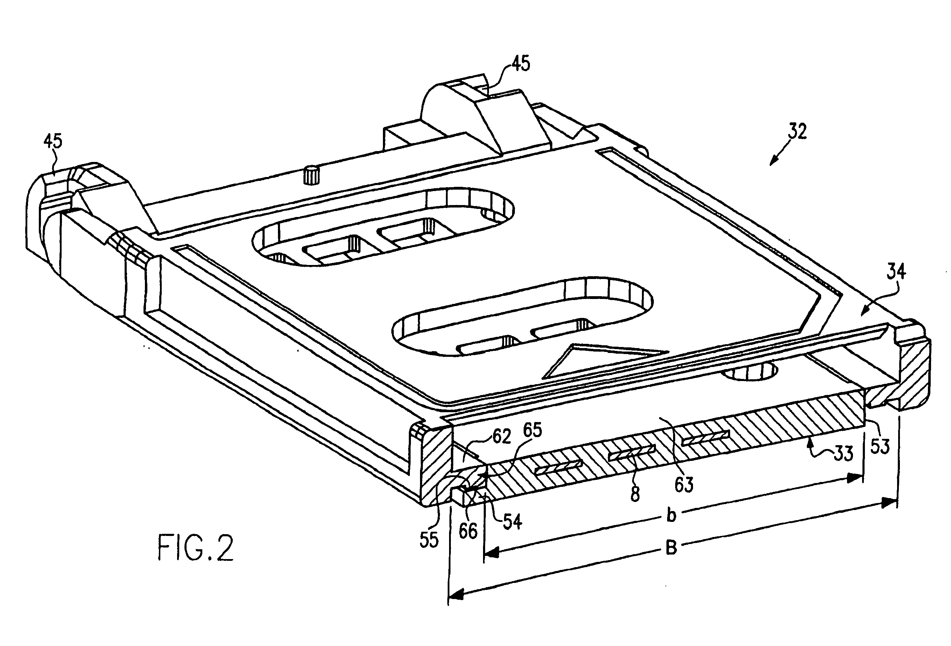

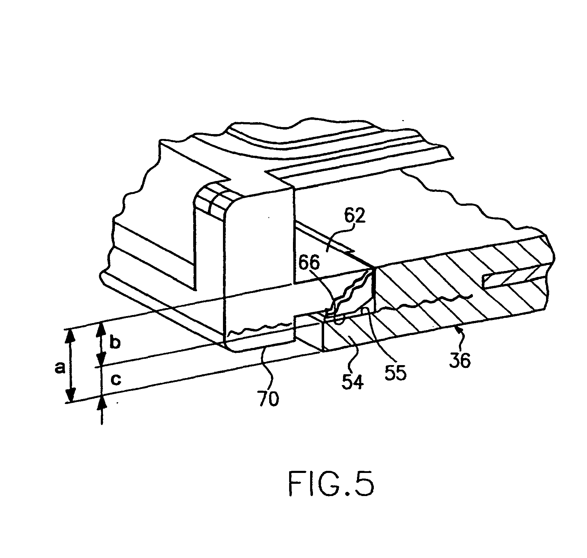

In Figs. 1 and 2 as well as in Fig. 5 a contacting apparatus 32 is shown. The contacting apparatus 32 comprises a contact support or housing 33 as well as a cover 34. The cover 34 is pivotally mounted at the housing 33 by means of hinge means 38. The hinge means 38 are designed such, that the cover 34 can be pivoted from its open position shown in Fig. 1 into a closed position and then slid into a (closed and) locked position as shown in Fig. 2. The cover 34 cannot be inadvertently opened if it in its locked (and closed) position.

The contact support 33 comprises a bottom wall 36 within which contact elements in the form of contact springs 8 are fixedly mounted, for instance by the injecting molding process for the contact support 33. The contact springs 8 are preferably biased towards and above a card abutment surface 63 of the bottom wall 36. The contact springs 8 are pressed downwardly when the cover 34 is closed having a SIM-card inserted therein, so as to provide for a good contacting action between contacts of the SIM-card and the cusps of the contact springs 8.

The bottom wall 36 comprises first and second spaced and upwardly extending structures forming first and second side walls 37 and 73, respectively.

The side walls 37 and 73 border or limit a recess or indentation 35 of the contact support 33.

A cut-out portion or window 41 is provided in the bottom wall 36 to make it easier to grasp the SIM-card and the cover 34 when opening the cover 34. The recess 35 is further bordered by a polarization inclination 48 adjacent the first side wall 37 and a front wall 39 adjacent the second side wall 73. As is known, contact ends 11 of the contact elements 8 are adapted to contact certain contact pads which are provided for example on a printed circuit board not shown. Naturally, other possibilities of termination for the contact elements 8 are conceivable.

As shown in Fig. 1 on the left hand side two laterally spaced hinge means 38 are provided. Each of the hinge means 38 comprises contact support hinge means 42 and cover hinge means 43. The hinge means 42 and the cover hinge means 43, respectively, are preferably formed as a single piece together with the respective component, i.e. contact support and cover, respectively. This is done preferably by means of injection molding of plastic material.

Two laterally spaced abutment surfaces 40 are formed by the two contact support hinge means 42. The front wall 39 extends under a right angle with respect to the side wall 73.

The cover hinge means 43 comprise an inwardly projecting pin 44. The pin 44 extends into a bearing opening 46 of the contact support hinge means 42. The bearing opening 46 is closed at its bottom by a bottom wall 47 which is also called a lower pin guide. The bearing opening 46 cooperates with the pin 44. The pin 44 can be inserted via an opening 45 into the contact support hinge means 42. Due to this design the cover 35 can be moved from its open position shown in Fig. 1 into a closed position in which the SIM-card is pressed against the contact cusps of the contact elements 8. The bearing openings 46 further allow a sliding movement of the cover 34 from its closed position into a (closed and) locked position in which projections 60, 61 formed by the cover 34 are moved under projections 50, 51 formed by the structures of the contact support 33 so as to lock the cover 34 in its locking position.

In addition the contact support 33 forms inclined with respect to the first side wall 37 an inclined surface, i.e. a polarizing inclination 48 which cooperates with a respective inclined edge of the SIM-card as to guarantee the correct position of the SIM-card in the contacting apparatus 32.

The contact support 33, at opposite sides, comprises perpendicularly to its card abutment or support surface 63 side surfaces 52, 53. The larger or central portion of the card abutment surface 63 comprises a width b which is smaller than the width B (see Fig. 2) of the SIM-card which is inserted into the cover 34.

In the right (Fig. 1) or forward area of the bottom wall 36 support means are provided having the form of a wing 54 extending laterally and horizontally to the right hand side. The wing 54 forms a horizontal support surface 54 for the cover 34. Also, on the left hand side of the contact support 33 opposite to wing 54 support means could be provided, however, this is not shown in Figs. 1 and 2.

The cover 34 comprises in substance a cover plate or cover wall 80 at which laterally opposite to each other longitudinal rails 81 are formed. Each of the rails 81 supports at its backward end cover hinge means 43. Each of that longitudinal rails 81 forms (besides the mentioned projections 60, 61) inwardly extending ribs 65 which form abutment surfaces 62 extending parallel to a cover plate bottom side 71. In this manner the cover 74 forms a card receiving space 64 adapted to receive a SIM-card. The longitudinally extending rails 81 comprise bottom sides 70. At least the right hand bottom side 70 abuts on the support surface 55 of the wing 54 with an abutment surface 66 formed at the rib 65 at the time the cover 34 is pivoted into its closed position and then slid into its locking position.

Fig. 2 shows the contacting apparatus 32 in its closed and locked position. It is noted that the abutment surfaces 62, 63 are located for all purposes in a plane and that the rib 65 abuts with its lower abutment surface 66 on the abutment or support surface 55 of the wing 54.

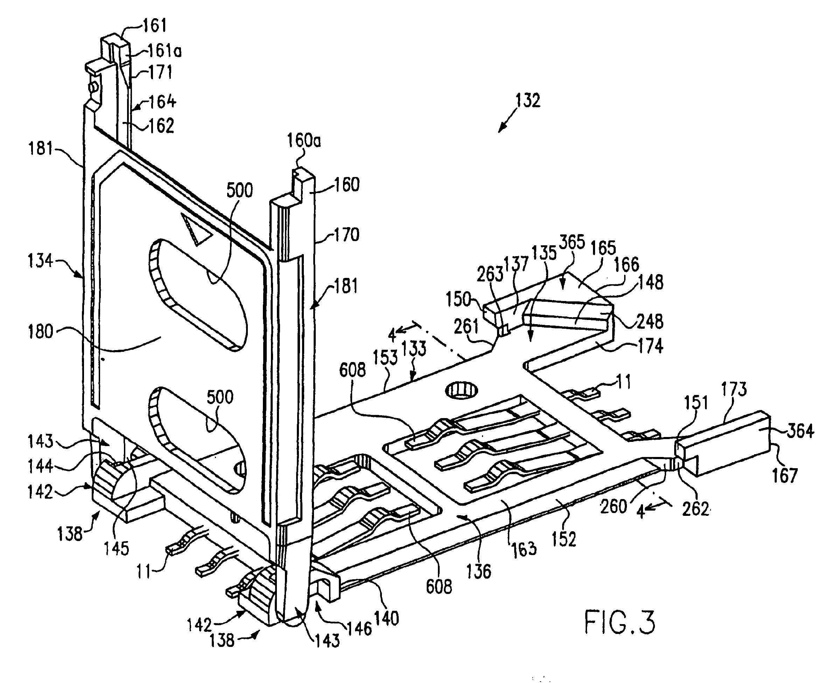

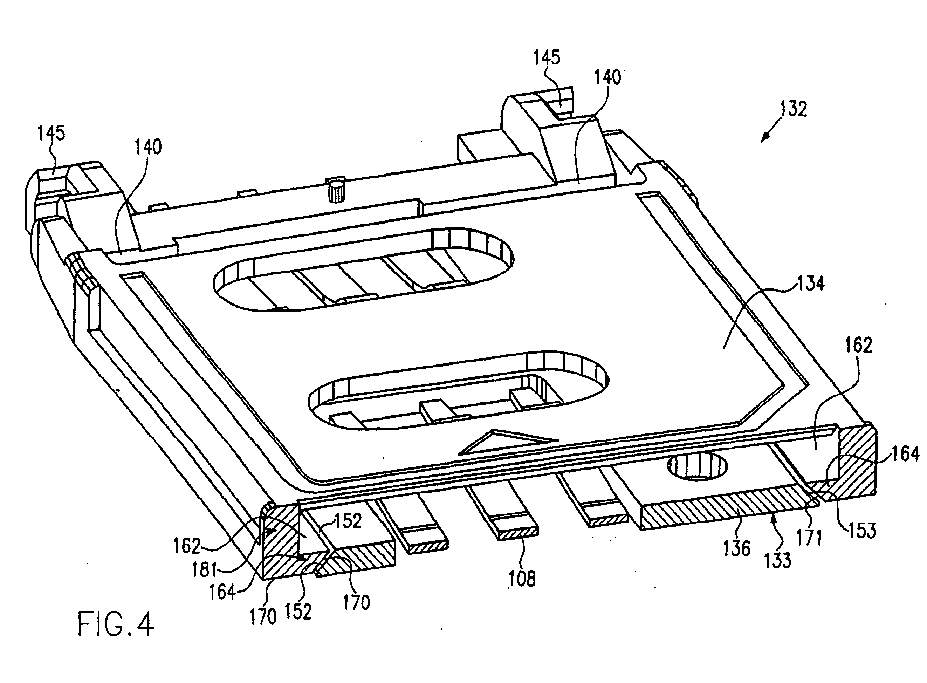

Fig. 2 and in particular the enlargement of Fig. 2 shown in Fig. 5 disclose that by the provision of the inclined abutment surfaces (schematically shown by wavelines) at the cover 34 as well as at the contact support 33 a substantial reduction of the height of the contact apparatus can be achieved. Fig. 5 shows that this reduction is in substance a decrease from the thickness a to the thickness b, with the thickness c no longer being present. This feature is shown in more detail by the preferred embodiment shown in Figs. 3 and 4.

When describing the preferred embodiment of Figs. 3 and 4 largely the same reference numerals are used as they were used in Figs. 1 and 2. However, the number 100 was added to the respective reference numerals used in Figs. 1, 2 and 5.

The contacting apparatus 132 shown in Figs. 3 and 4 comprises a housing 133 used as a contact support. The contacting apparatus 132 further comprises a cover 134 which is pivotally mounted at the housing 133. The cover 134 comprises a cover wall 180, with two laterally spaced hinge means 138 formed at said cover wall 180. The hinge means 138 are designed such, that the cover 134 can be pivoted from its open position according to Fig. 3 into its closes position and subsequently by a sliding movement into its locked position, such that in the closed and locked position shown in Fig. 4 the cover 134 cannot be easily opened inadvertently.

The contact support 133 comprises a bottom wall 136 in which the contact elements preferably in the form of contact springs 108 are fixedly mounted. For instance the contact springs 108 are fixedly mounted in the bottom wall 136 at the time the bottom wall is injection molded of plastic material. When the cover 134 is closed and a SIM card has been inserted into the cover 134 the contacts provided by the SIM-card are pressed against the contact springs 108, i.e. the contact cusps formed by that contact springs 108 so as to provide a good contact action between the contact cusps as well as the card contacts.

The bottom wall 136 comprises structures 364, 365 which form side walls 137 and 173 which border a recess or indentation 135. A cut-out portion 174 is provided in the bottom wall 136 so as to have access to the cover 136 for opening purposes. A polarization inclination 148 boarders the recess 135. A front wall which would correspond to the front wall 39 in Fig. 1 is not necessary and consequently the length of the contact support 132 is reduced. As is known, termination ends 11 of the contact elements or contact springs 108 are in contact with certain contact pads or contact regions which are provided for instance on a printed circuit board (not shown). The contact support 133 forms by means of contact support hinge means 142 abutment surfaces 140 of which only one is shown in Fig. 3. The SIM-card is in abutment with abutment surfaces 140 when the cover 134 is pivoted into its closed position. This abutment situation also remains in existence at the time the cover 134 is placed in its locked position.

As far as the contact elements 108 are concerned attention is drawn to the fact that the contact elements 108 are provided with extensions 608 so that the contact elements cannot interfere with openings 500 which are provided in the cover 134.

At the location where the cover 134 is pivotally mounted at the contact support 133 two hinge means 138 are formed. Each of the hinge means 138 comprises contact support hinge means 142 and cover hinge means 143. The cover hinge means 143 each comprise a pin 144 which is adapted to project into a bearing opening 146 of the contact support hinge means 142. The bearing opening 146 allows the same movements of the cover 134 as was described in connection with the bearing openings 46 of Figs. 1 and 2.

The contact support hinge means 142 have compared with the respective design shown in Fig. 1 the advantage that there is no need for the bottom wall (pin guide) 47. Due to the inventive design of the abutment means of the cover 134 and of the contact support 133, yet to be described, the bottom wall 47 is not necessary. This adds to the reduction of the design height of the contact apparatus 132 of the preferred embodiment.

As shown in Fig. 3 the side walls 137 and 173, respectively, are provided at the right or forward end of the contact support 133. The side walls 137 and 173 help to support of the SIM-card (not shown). Also, similar to Fig. 1, the polarization inclination 148 extends perpendicularly with respect to the bottom wall 136. Moreover, a slightly inclined surface 248 which leads to the upper edge of the polarization inclination 248 allows an improved sliding movement of the SIM-card into the recess 135. The surface 248 is slightly inclined with respect to a horizontal surface 165 of the structure 165.

The side walls 137 and 173 are provided at the structure 365 and a structure 364 of the bottom wall. Both structures 365 and 364 of the bottom wall are located at a fork like extensions of the bottom wall 136. Edges 166 and 167 of the bottom wall 136 (or its structures 364, 365) are located on one line. Comparing the location of said line with the contacting apparatus shown in Fig. 1 it can be realized, that said line could be located in the design of Fig. 1 to the left of a plane which is defined by the inwardly facing front wall 39 of the design of Fig. 1. Consequently, one can realize that with respect to the design of Fig. 1 the embodiment of Figs. 3 and 4 provides a contacting apparatus 132 which has a smaller design length than the contacting apparatus shown in Figs. 1 and 2.

In accordance with the invention the embodiment of Figs. 3 and 4 replaces the side surfaces 52 and 53 of Fig. 1 by longitudinally and laterally extending inclined surfaces 152 and 153 which will assume the tasks for instance of the abutment surface 55 of Fig. 1. Said inclined surfaces 152 and 153 cooperate with inclined surfaces 170 and 171 provided at the cover 134 as is shown quite clearly in Fig. 4. Indeed the inclined surfaces 152 and 153 fit or mate together with the inclined surfaces 170 and 171. In the embodiment shown in Figs. 3 and 4 the inclined surfaces 152 and 153 extend in substance along the entire length of the bottom wall 136. The inclined surfaces 170 and 171 extend along the entire length of longitudinal rails 181 yet to be described in some detail, longitudinal rails 181 which are provided or formed at both sides of a cover plate 134. Different from what is shown in the drawings, it is also possible to provide the inclined surfaces 152 and 153 and also 170 and 178 only along a shorter distance or preferably for instance in the forward area adjacent to one or both structures 365 and 364, respectively.

Figs. 3 and 4 disclose in some detail that the inclined surfaces 170 and 171 of the cover 134 are formed at inwardly projecting projections 164 of the rails 181. Said projections 164 do not only form the inclined surfaces 170 and 171 but also the abutment surfaces 162 for the SIM-card.

As is shown in Fig. 3 the inclined surface 152, and also in a corresponding manner the inclined surface 153, continue at a forward end in a perpendicular with respect to card abutment surface 163) surface 260 and 261, respectively.

Said inclined surfaces 260 and 261 are inclined with respect to the longitudinal axis of the contact support. The inclined surfaces 260 and 261 continue in abutment surfaces 262 and 263 which extend parallel to the longitudinal axis. The abutment surfaces 262 and 263 are located in the area of a recess which is provided below of the projections 151 and 150. Below said projections 151 and 150, respectively, guide projections 160 and 161, respectively of the cover 134 come into engagement at the time the locking position of the cover 134 is reached. The abutment surfaces 262 and 263 center and guide the cover 134 and thus reduce the play between the cover 134 and the contact support 133. Further, at guide projections 160 and 161 of the cover 134 respective abutment surfaces 160a and 161a are provided which provide for a guidance without play for the locked cover 134.

It should be added that for with the design of Figs. 1 and 2 and also for the preferred embodiment of Figs. 3 and 4 the pins 144 are inserted through openings 145 into bearing openings 146.

It should be noted that the SIM-card is only supported by a three-point-support formed two spaced abutment surfaces 140 and a polarization inclination 148 spaced in longitudinal direction.

## Claims

1. A contacting apparatus (132) for a SIM-card, said contacting apparatus (132) comprising:
a contact support (133) having longitudinal side surfaces;
a cover (134) pivotably mounted at said contact support (133);
said cover comprising along opposite edges thereof longitudinal rails (181) with inwardly projecting longitudinal guide projections (164) adapted for receiving the SIM-card,
and wherein said cover (134) is adapted to press said SIM-card against contact elements (108) fixedly supported in said contact support (133), **characterized by :**
said cover (134) further comprising on said longitudinal guide projections (164) inclined surfaces (170, 171), and
at least a part of said longitudinal side surfaces being inclined surfaces (152, 153) which are adapted to come into abutment with said inclined surfaces (170, 171) of the cover when the cover is pivoted into its closed position.

2. The contacting apparatus (132) of claim 1 wherein said inclined surfaces of the cover and of the contact support are provided in substance along the entire length of the contact support and the cover.

3. The contacting apparatus (132) of claim 1 wherein said inclined surfaces of the cover and of the contact support are provided only in a certain area of cover and contact support, preferably in the forward area of the cover and contact support.

4. The contacting apparatus (132) of one or more of the preceding claims, wherein the inclined surfaces are provided on both sides of said cover and said contact support.

5. The contacting apparatus (132) of one or more of the precedings claims, wherein the contact elements (108) are provided, at those ends which are adapted to contact contacts of a SIM-card, with extensions (608) such, that the free ends of the contact elements (108) cannot become caught in openings (500) of the cover (134) or of the contact support (133).

6. The contacting apparatus (132) of one or more of the preceding claims, wherein hinge means (138) are provided for mounting the cover (134) at the housing (133), which allow both a pivotal movement of the cover with respect to the contact support and a sliding movement for locking of the cover in a locking position corresponding to a reading position.

7. The contacting apparatus (132) of one or more of the preceding claims, wherein hinge means (138) are provided for allowing a pivotally movement of the cover with respect to the housing, said hinge means (138) comprising contact support hinge means (142) and cover hinge means (143), and wherein the contact support hinge means provide a bearing opening (146) which is open towards the bottom so as to reduce the design height of the contacting apparatus.

8. The contacting apparatus (132) of claim 6 or claim 7, wherein said hinge means are formed by engaging elements provided at the cover and at the housing.

9. The contacting apparatus (132) of claim 8, wherein said engaging elements are pins and recesses, respectively.

10. The contacting apparatus (132) of one or more of the preceding claims 6-9, wherein the hinge means comprise cover hinge means in the form of pins and housing hinge means in the form of openings.

11. The contacting apparatus (132) of one or more of the preceding claims, wherein at the bottom surface or bottom side of the cover a card receiving space is formed which provides for a lateral guidance of a SIM-card inserted into said cover.

12. The contacting apparatus (132) of one or more of the preceding claims, wherein said cover forms wall portions which provide for the lateral guidance of the SIM-card.

13. The contacting apparatus (132) of one or more of the preceding claims, wherein at the housing an abutment surface shoulder (140) is formed which limits the depth of insertion of the SIM-card.

14. The contacting apparatus (132) of one or more of the preceding claims, wherein the housing and the cover, respectively, are made of plastic material preferably by means of injection molding.

15. The contacting apparatus (132) of one or more of the preceding claims, wherein the SIM-card is supported at its edges only by a three-point support formed by two spaced abutment surfaces (140) and a polarization inclination (148) spaced in longitudinal direction.

16. The contacting apparatus (132) of one or more of the preceding claims, wherein the contact support is provided on opposite sides with abutment surfaces (262, 263) and wherein corresponding abutment surfaces(160a, 161a) on said longitudinal guide projection (164) of said cover (134) provide for a guidance without any play for the cover in its locked position.

## Patentansprüche

1. Kontaktiervorrichtung (132) für eine SIM-Karte, wobei die Kontaktiervorrichtung (132) folgendes aufweist:
einen Kontaktträger (133) mit Längsseitenoberflächen;
einen Deckel (134) schwenkbar angebracht an den Kontaktträger (133); wobei der Deckel entlang entgegengesetzt liegender Kanten Längsschienen (181) aufweist und zwar mit nach Innen vorragenden Längsführungsvorsprüngen (164) geeignet zur Aufnahme der SIM-Karte, und wobei der Deckel (134) geeignet ist die SIM-Karte gegen Kontaktelemente (108) zu drücken, die fest in dem Kontaktträger (133) getragen sind, **dadurch gekennzeichnet, dass**
der Deckel (134) ferner an seinen Längsführungsvorsprüngen (164) geneigte Oberflächen (170, 171) aufweist, und dass
mindestens ein Teil der Längsseitenoberflächen geneigte Oberflächen (152, 153) sind, die geeignet sind, um in Anschlag mit den geneigten Oberflächen (170, 171) des Deckels dann zu kommen, wenn der Deckel in seine geschlossene Position verschwenkt ist.

2. Kontaktiervorrichtung (132) nach Anspruch 1, wobei die geneigten Oberflächen des Deckels und des Kontaktträgers im wesentlichen entlang der gesamten Länge des Kontaktträgers und des Deckels vorgesehen sind.

3. Kontaktiervorrichtung (132) nach Anspruch 1, wobei die geneigten Oberflächen des Deckels und des Kontaktträgers nur in einem bestimmten Gebiet des Deckels und des Kontaktträgers vorgesehen sind, vorzugsweise in dem vorderen Gebiet des Deckels und des Kontaktträgers.

4. Kontaktiervorrichtung (132) nach einem oder mehreren der vorhergehenden Ansprüche, wobei die geneigten Oberflächen auf beiden Seiten des Deckels und des Kontaktträgers vorgesehen sind.

5. Kontaktiervorrichtung (132) nach einem oder mehreren der vorhergehenden Ansprüche, wobei die Kontaktelemente (108) an denjenigen Enden, die zur Kontaktierung mit den Kontakten einer SIM-Karte geeignet sind, mit Verlängerung (608) derart ausgestattet sind, dass die freien Enden der Kontaktelemente (108) nicht in den Öffnungen (500) des Deckels (134) oder des Kontaktträgers (133) eingefangen werden können.

6. Kontaktiervorrichtung (132) nach einem oder mehreren der vorhergehenden Ansprüche, wobei Gelenk- oder Angelmittel (138) vorgesehen sind, und zwar zur Anbringung des Deckels (134) an dem Gehäuse bzw. Kontaktträger (133), wobei diese sowohl eine Schwenkbewegung des Deckels bezüglich des Kontaktträgers und eine Gleitbewegung gestatten und zwar zum Verriegeln des Deckels in einer Verriegelungsposition entsprechend einer Leseposition.

7. Kontaktiervorrichtung (132) nach einem oder mehreren der vorhergehenden Ansprüche, wobei die Gelenk- oder Anlenkmittel (138) eine Schwenkbewegung des Deckels bzgl. des Gehäuses bzw. Kontaktträgers gestatten, wobei die Gelenk- oder Anlenkmittel (138) Kontaktträgeranlenkmittel (142) und Deckelanlenkmittel (143) aufweisen, und wobei die Kontaktträgeranlenkmittel eine Lageröffnung (146) vorsehen, die zum Boden hin offen ist, um so die Konstruktionshöhe für die Kontaktiervorrichtung zu reduzieren.

8. Kontaktiervorrichtung (132) nach Anspruch 6 oder 7, wobei die Gelenkmittel durch Eingriffselemente vorgesehen am Deckel und am Gehäuse gebildet sind.

9. Kontaktiervorrichtung (132) nach Anspruch 8, wobei die Eingriffselemente Stifte bzw. Ausnehmungen sind.

10. Kontaktiervorrichtung (132) nach einem oder mehreren der vorhergehenden Ansprüche 6 - 9, wobei die Anlenk- bzw. Gelenkmittel Deckelanienkmittel bzw. Deckelgelenkmittel in der Form von Stiften und Gehäusegelenkmittel in der Form von Öffnungen aufweisen.

11. Kontaktiervorrichtung (132) nach einem oder mehreren der vorhergehenden Ansprüche, wobei an der Bodenoberfläche oder Bodenseite des Deckels ein Kartenaufnahmeraum ausgebildet ist, der eine seitliche Führung für eine in den Deckel eingesetzte SIM-Karte vorsieht.

12. Kontaktiervorrichtung (132) nach einem oder mehreren der vorhergehenden Ansprüche, wobei der Deckel Wandteile bildet, die die seitliche Führung der SIM-Karte vorsehen.

13. Kontaktiervorrichtung (132) nach einem oder mehreren der vorhergehenden Ansprüche, wobei an dem Gehäuse eine Anschlagoberflächenschulter (140) ausgebildet ist, die die Einsetztiefe der SIM-Karte begrenzt.

14. Kontaktiervorrichtung (132) nach einem oder mehreren der vorhergehenden Ansprüche, wobei Gehäuse bzw. Deckel aus Kunststoffmaterial vorzugsweise durch Spritzformen hergestellt sind.

15. Kontaktiervorrichtung (132) nach einem oder mehreren der vorhergehenden Ansprüche, wobei die SIM-Karte nur an ihren Kanten durch eine Drei-Punkt-Lagerung getragen ist, und zwar gebildet durch die beiden mit Abstand angeordneten Anschlagoberflächen (140) und eine Polarisationsschräge (148) beabstandet in Längsrichtung.

16. Kontaktiervorrichtung (132) nach einem oder mehreren der vorhergehenden Ansprüche, wobei der Kontaktträger auf entgegen gesetzten Seiten mit Anschlagoberflächen (262, 263) ausgestattet ist, und wobei die entsprechenden Anschlagoberflächen (160a, 161a) auf den erwähnten Längsführungsvorsprünge (164) des Deckels (134) eine Führung vorsehen ohne irgendein Spiel für den Deckel in seiner verriegelten Position.

## Revendications

1. Appareil de prise de contact (132) pour carte SIM, cet appareil de prise de contact (132) comprenant :
un support de contacts (133) ayant des surfaces latérales longitudinales ;
un couvercle (134) monté à pivotement sur le support de contacts (133) ;
le couvercle comprenant le long de ses bords opposés des rails longitudinaux (181) avec des saillies de guidage longitudinales (164) adaptés à recevoir la carte SIM ; et
dans lequel le couvercle (134) est adapté à presser la carte SIM contre des éléments de contact (108) montés de façon fixe dans le support de contacts (133), **caractérisé en ce que** :
le couvercle (134) comprend en outre sur les saillies de guidage longitudinales (164) des surfaces inclinées (170, 171) ; et
au moins une partie des surfaces latérales longitudinales est constituée de surfaces inclinées (152, 153) qui sont adaptées à venir buter contre les surfaces inclinées (170, 171) du couvercle quand le couvercle est amené à pivoter dans sa position fermée.

2. Appareil de prise de contact (132) selon la revendication 1, dans lequel les surfaces inclinées du couvercle du support de contacts sont prévues sensiblement sur toute la longueur du support de contacts et du couvercle.

3. Appareil de prise de contact (132) selon la revendication 1, dans lequel les surfaces inclinées du couvercle et du support de contacts sont prévues seulement dans une certaine zone du couvercle et du support de contacts, de préférence dans la zone avant du couvercle et du support de contacts.

4. Appareil de prise de contact (132) selon l'une quelconque des revendications précédentes, dans lequel les surfaces inclinées sont prévues des deux côtés du couvercle et du support de contacts.

5. Appareil de prise de contact (132) selon l'une quelconque des revendications précédentes, dans lequel les éléments de contact (108) sont munis, aux extrémités qui sont adaptées à entrer en contact avec les contacts d'une carte SIM, d'extensions (608) de sorte que les extrémités libres des éléments de contact (108) ne peuvent être prises dans les ouvertures (500) du couvercle (134) ou du support de contacts (133).

6. Appareil de prise de contact (132) selon l'une quelconque des revendications précédentes, dans lequel des moyens de charnière (138) sont prévus pour monter le couvercle (134) sur le boîtier (133), pour permettre un mouvement de pivotement du couvercle par rapport au support de contacts et un mouvement de glissement pour verrouiller le couvercle dans une position de verrouillage correspondant à une position de lecture.

7. Appareil de prise de contact (132) selon l'une quelconque des revendications précédentes, dans lequel des moyens de charnière (138) sont prévus pour permettre un mouvement de pivotement du couvercle par rapport au boîtier, les moyens de charnière (138) comprenant des moyens de charnière de support de contacts (142) et des moyens de charnière de couvercle (143), et dans lequel les moyens de charnière de support de contacts définissent une ouverture de support (146) qui est ouverte par le bas de façon à réduire la hauteur de l'appareil de prise de contact.

8. Appareil de prise de contact (132) selon la revendication 6 ou 7, dans lequel lés moyens de charnière sont constitués par d'éléments de mise en contact prévus au niveau du couvercle et du boîtier.

9. Appareil de prise de contact (132) selon la revendication 8, dans lequel les éléments de mise en contact sont des broches et des évidements, respectivement.

10. Appareil de prise de contact (132) selon l'une quelconque des revendications 6 à 9, dans lequel les moyens de charnière comprennent des moyens de charnière de couvercle en forme de tiges et des moyens de charnière de boîtier en forme d'ouvertures.

11. Appareil de prise de contact (132) selon l'une quelconque des revendications précédentes, dans lequel, au niveau de la surface supérieure ou du côté inférieur du couvercle, un espace de réception de carte est formé et assure un guidage latéral d'une carte SIM insérée dans le couvercle.

12. Appareil de prise de contact (132) selon l'une quelconque des revendications précédentes, dans lequel le couvercle forme des parties de parois qui assurent un guidage latéral de la carte SIM.

13. Appareil de prise de contact (132) selon l'une quelconque des revendications précédentes, dans lequel au niveau du boîtier un épaulement superficiel de butée (140) est formé et limité la profondeur d'insertion de la carte SIM.

14. Appareil de prise de contact (132) selon l'une quelconque des revendications précédentes, dans lequel le boîtier et le couvercle, respectivement, sont en matière plastique, de préférence par moulage par injection.

15. Appareil de prise de contact (132) selon l'une quelconque des revendications précédentes, dans lequel la carte SIM est portée au niveau de ses bords seulement par un support trois points constitué de deux surfaces de butée espacées (140) et d'une inclinaison de polarisation (148) espacée dans la direction longitudinale.

16. Appareil de prise de contact (132) selon l'une quelconque des revendications précédentes, dans lequel le support de contacts est muni sur ses côtés opposés de surfaces de butée (262, 263) et dans lequel des surfaces de butée correspondantes (160a, 161a) sur les saillies de guidage longitudinales (164) du couvercle (134) assurent un guidage sans jeu pour le couvercle dans sa position verrouillée.
